# EUROPEAN PATENT APPLICATION

(11) **EP 3 647 707 A1**
(43) Date of publication of application: **06.05.2020**
(21) Application number: 18204000.6
(22) Date of filing: 01.11.2018
(51) Int. Cl.: F28D 20/02, F28F 9/22

(54) **THERMAL ENERGY AND STORAGE DEVICE**

(71) Applicant: Perkins Engines Company Ltd, Peterborough PE1 5FQ (GB)
(72) Inventor: FULMER, Brian, Shelby Charter Township MI 48315 (US); LAZAR, Eli, Champaign IL 61821 (US); STRASHNY, Igor, Tucson AZ 85715 (US); SLOUGH, Wesley, Bloomington IL 61704 (US)
(74) Representative: Murgitroyd & Company

(57) **Abstract**

A thermal energy storage device (10) is disclosed. The device incudes a tank (12) having an inlet (14) and an outlet (16), and at least one fluid distribution plate (22) which divides the tank into at least first and second chambers (24a, 24b). The at least one fluid distribution plate (22) has a plurality of groups (26) of apertures (28), which allow fluid communication between the first and second chambers (24a, 24b). Each aperture (28) has an aperture outlet axis. The device (10) also includes a first fixed array of containers (30) located within the second chamber (24b). Each container (30) is filled with an energy storage medium. Each group (26) of apertures (28) is arranged in the at least one plate (22) such that the aperture outlet axis of each aperture (28) of a group (26) projects through at least one container (30).

## Description

### Field of Invention

This invention relates to a thermal energy storage device, and a vehicle cooling system incorporating the thermal energy storage device.

### Background of Invention

It is known for vehicle cooling systems to include a thermal energy storage device. US20020014329A1 discloses a thermal energy storage device which is part of a vehicle cooling system. The thermal energy storage device comprises a tank having an inlet and an outlet with a fluid distribution plate located between the inlet and outlet which divides the tank into first and second chambers. Located in each chamber are a plurality of containers filled with an energy storage medium. The fluid distribution plate comprises a plurality of flow permitting apertures. The apertures are arranged to direct coolant into gaps between the containers. As a result of the flow path of the coolant through the tank of the device of US'329 A1, the heat transfer coefficient of the device of US'329A1 is poor.

It is an object of the present invention to obviate or mitigate this disadvantage of prior thermal energy storage devices.

### Summary of Invention

According to a first aspect of the present invention, there is provided a thermal energy storage device (TES) comprising:
a tank having an inlet and an outlet;
at least one fluid distribution plate which divides the tank into at least first and second chambers, the at least one fluid distribution plate having a plurality of groups of apertures allowing fluid communication between the first and second chambers, wherein each aperture has an aperture outlet axis; and
a first fixed array of containers located within the second chamber, each container filled with an energy storage medium;
wherein each group of apertures is arranged in the at least one plate such that the aperture outlet axis of each aperture of a group projects through at least one container.

According to a second aspect of the present invention, there is provided a cooling system for a vehicle cab, comprising:
an air conditioning circuit comprising an evaporator;
a cooling circuit containing a coolant and comprising a
   thermal energy storage device according to the first aspect, the device being fluidly connectable to the cooling circuit,
wherein the air conditioning and cooling circuits are in heat exchange contact with the evaporator.

According to a third aspect of the present invention, there is provided a vehicle comprising: a vehicle cab and the cooling system of the second aspect.

### Brief Description of the Drawings

Preferred embodiments of the present invention will now be described, by way of example only, with reference to the accompanying drawings, in which:
Figure 1 shows a first embodiment of a thermal energy storage (TES) device;
Figures 2A-B show fluid distribution plates of the TES device of Figure 1;
Figure 3 shows a second embodiment of a thermal energy storage device;
Figures 4A-B show a third embodiment of a thermal energy storage device; and
Figure 5 shows a cooling system which includes a thermal energy storage device.

### Detailed Description of the Drawings

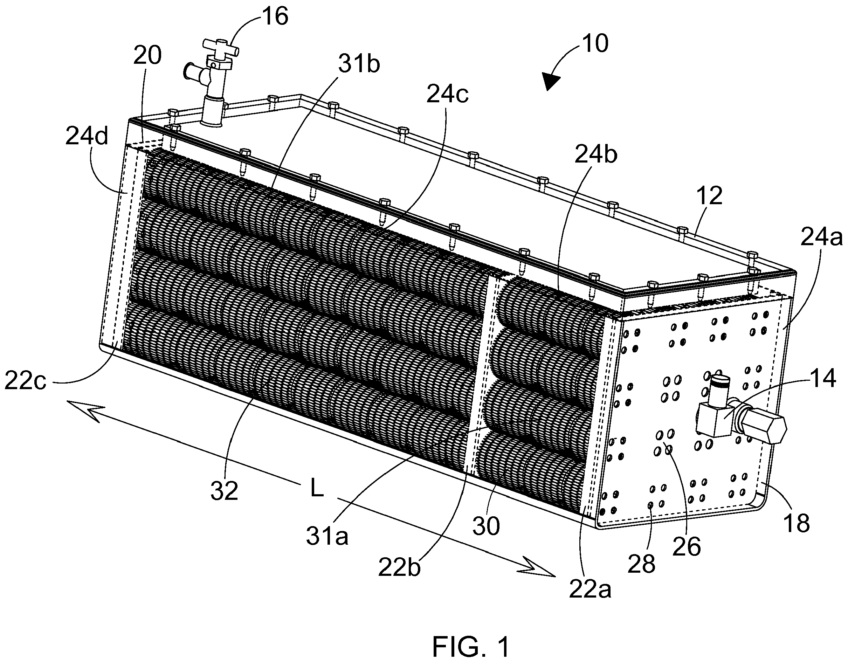

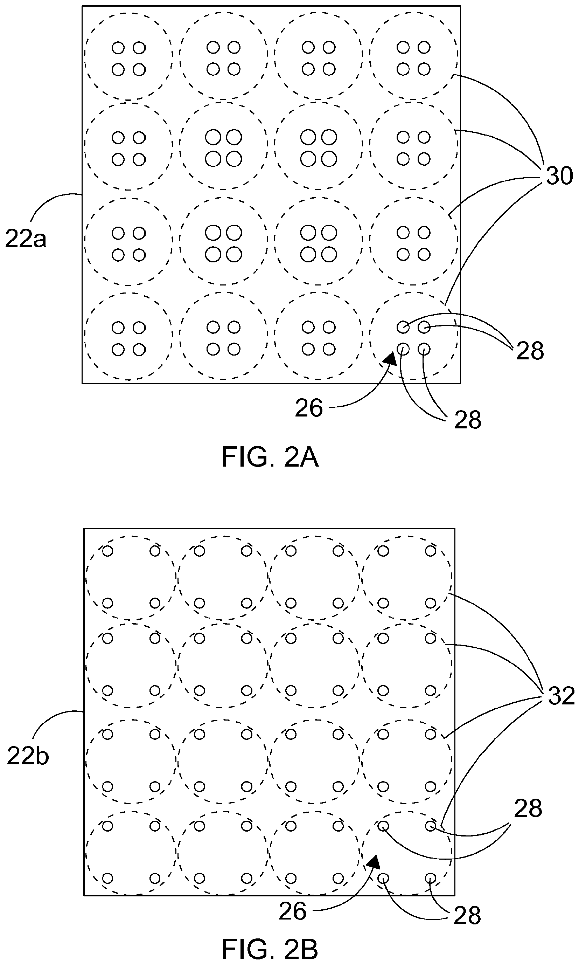

With reference to Figure 1 and Figures 2A-B, there is shown a thermal energy storage (TES) device 10. The device 10 comprises a tank 12 having an inlet and an outlet 14, 16. In the depicted example, the tank 12 is cuboidal and has a length L extending between first and second ends 18, 20. In the depicted example, the inlet 14 is provided at the first end 18 and the outlet 16 of the tank is provided at the second end 20. Located inside the tank 12 between the inlet and outlet 14, 16 is at least one fluid distribution plate 22. In the depicted example, there are first, second and third fluid distribution plates 22a, 22b, 22c.

Of the plates, the first plate 22a is located adjacent the inlet 14, and the third plate 22c is located adjacent the outlet 16. The second plate 22b is located between the first and third plates 22a, 22c. The first, second and third plates 22a, 22b, 22c divide the tank into first, second, third and fourth chambers 24a, 24b, 24c, 24d. Each plate 22a, 22b, 22c comprises a plurality of groups 26 of apertures 28, which allow fluid flow therethrough. The chambers 24a, 24b, 24c, 24d are thus fluidly connected.

The second chamber 24b has located therein a first array of containers 30, and third chamber has located therein a second array of containers 32. The containers 30, 32 of each chamber 24b, 24c are fixed in position. In the depicted example, the storage devices 30 of the second chamber 32 are fixed in position using a first net 31 a anchored to the first and second plates 22a, 22b, and the storage devices 32 of the third chamber 24c are fixed into position using a second net 31b anchored to the second and third plates 22b, 22c.

The containers 30, 32 are filled with an energy storage medium. The energy storage medium may be water, and the containers 30, 32 may be spherical in shape. However, other suitable mediums may be used, for example, ammonia. Further, the devices 30, 32 may be shaped differently, for example, the devices may be cylindrical or cuboidal. In the depicted example, one hundred and ninety two containers 30, 32 in total are located within the tank 12.

Each aperture 28 of each plate 22a, 22b, 22c has an aperture outlet and an aperture inlet. Further each aperture has an aperture outlet axis and an aperture outlet diameter. The "aperture outlet axis" is the central axis of the aperture at its aperture outlet. The "aperture outlet diameter" is the diameter of the aperture at its aperture outlet.

The apertures 28 of each group of apertures in each plate are arranged such that the aperture outlet axis of each aperture projects through at least one container 30, 32. In other words, if a straight line is drawn along the aperture outlet axis of each aperture it will pass through at least one of the containers. This is shown in Figures 2A-2B which show the plates 22a, 22b, 22c of the device of Figure 1. Specifically, Figure 2A shows the first plate 22a, and Figure 2B shows the plate arrangement used for each of the second and third plates 22b, 22c. As shown, the aperture outlet axes of the apertures 28 of each group 26 project through the same container 30, 32. As shown, the groups 26 of apertures 28 in each plate 22a, 22b, 22c are evenly distributed in each plate such that they are arranged in rows and columns, each row comprising four groups 26 of apertures 28 and each column comprising four groups 26 of apertures. The apertures of the four groups located closest to the centre of the first plate 22a each have a greater outlet diameter than the apertures of the other groups in the first plate. Preferably, the aperture outlet width of the apertures of the four groups 26 located closest to the centre of the first plate 22a is 50% larger than the aperture outlet width of the apertures of the other groups of apertures in the first plate. Further, the outlet diameter of the apertures 28 in the first plate is greater than the apertures 28 in the second and third plates 22b, 22c. As shown, each group 26 comprises four apertures 28.

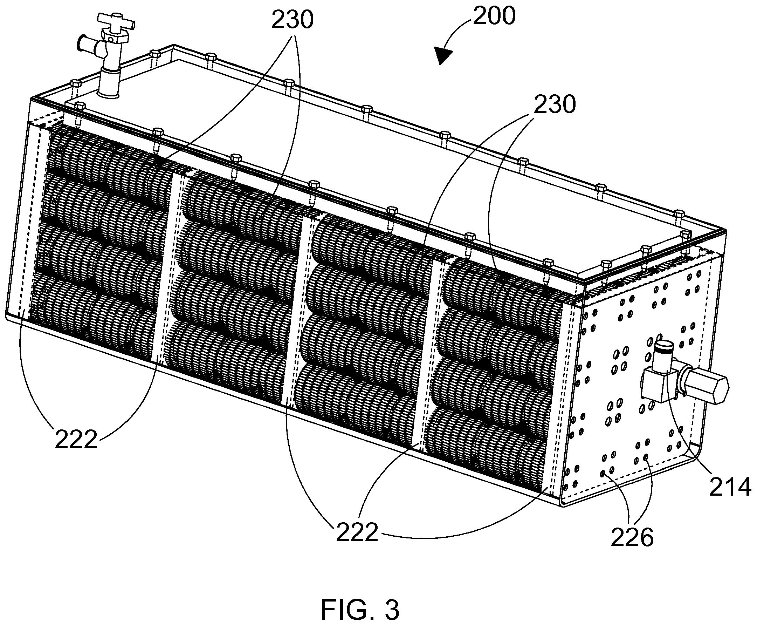

A second embodiment of the TES device 200 is shown in Figure 3. In this embodiment all of the containers 230 are spherical and have a diameter of 4 inches. Alternatively, the containers 230 may have a diameter of 2 inches. In the embodiment depicted in Figure 3, the device 200 has five plates 222, which divide the tank into six chambers. The plate 222 closest the inlet 214 has the same construction with respect to the first plate of the first embodiment, and the remaining plates 222 have the same construction with respect to the second and third plates of the first embodiment. This embodiment includes four fixed arrays of containers 230, each array being fixed in position inside one of the chambers.

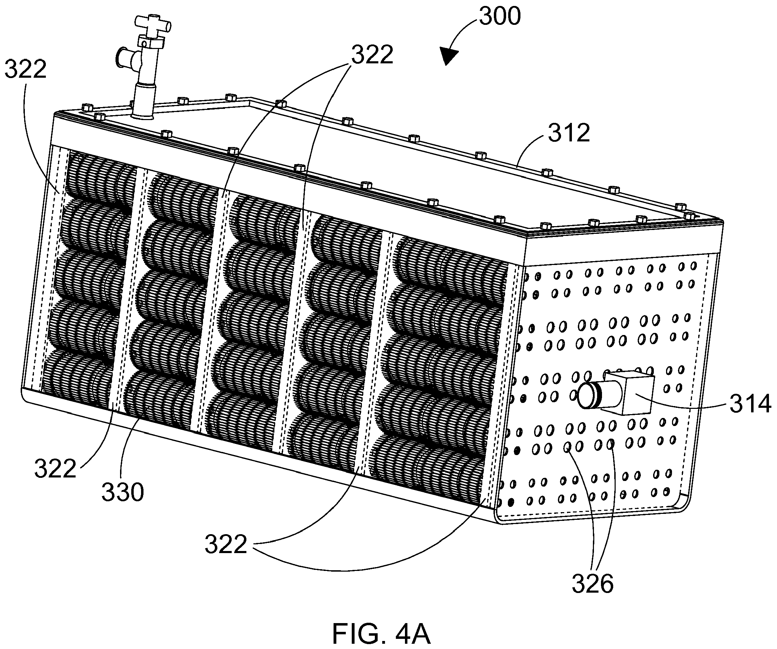

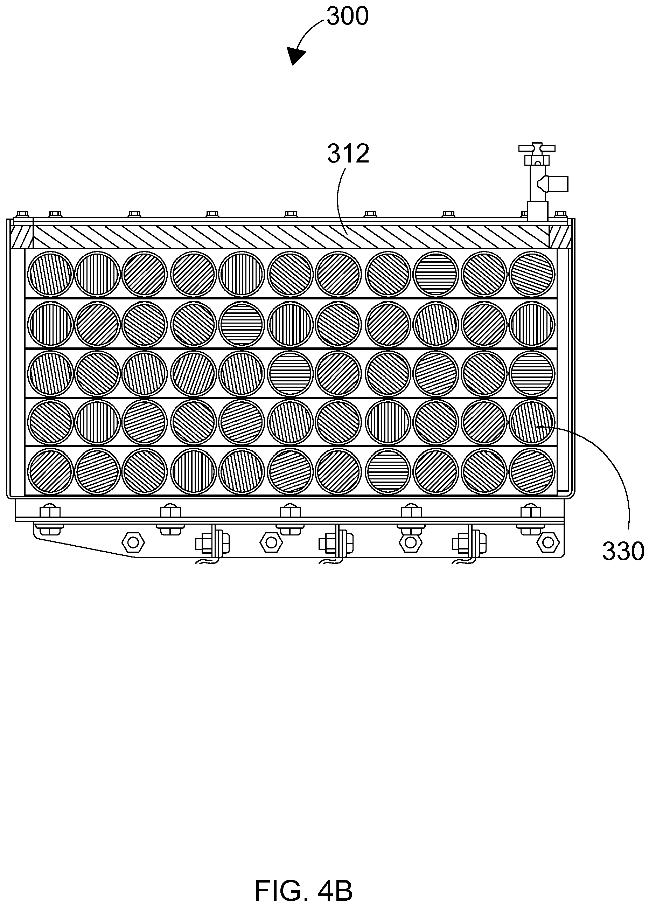

Figures 4A and 4B show a third preferred embodiment of the TES device 300. In this embodiment all of the containers 330 are spherical. The device has six plates 322, which divide the tank 312 into seven chambers. In this embodiment the tank has located therein three hundred and thirty containers, which is a greater number of containers than in the first embodiment. The first plate 322 located closest to the inlet 314 is different with respect to the first embodiment in that it comprises a greater number of groups of apertures 326 to account for the fact that the tank comprises a greater number of containers with respect to the first embodiment. The inventor has found that the arrangement of the preferred embodiment has a particularly high thermal transfer coefficient.

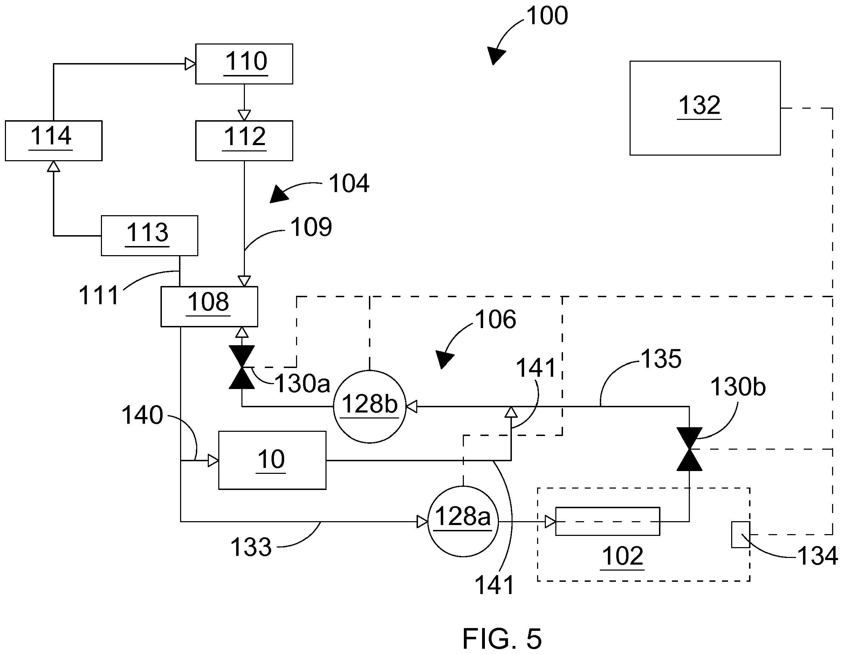

Figure 5 shows a cooling system 100 for a vehicle cab 102 of a vehicle having an internal combustion engine. The system 100 includes a thermal energy storage device 10 of the kind shown in Figure 1, Figure 2 or Figure 3. The cooling system 100 comprises an air conditioning circuit 104 containing a refrigerant and a cooling circuit 106 containing a coolant. In the depicted example, the air conditioning circuit 104 is a vapour-compression circuit.

The air conditioning circuit 104 comprises an evaporator 108, a condenser 110, an expansion valve 112, an accumulator 113 and a compressor 114. A first fluid line 109 for the refrigerant extends from the condenser 110 to the evaporator 108. The expansion valve 112 controls the flow of refrigerant from the condenser 110 to the evaporator 108 through the first fluid line 109. A second fluid line 111 for the refrigerant extends from the evaporator 108 to the condenser through the accumulator 113 and compressor 114, so as to form a fluid circuit for the refrigerant to be circulated within. The second fluid line 111 passes through the accumulator 113 and compressor 114. The compressor 114 is operable to increase the pressure of the refrigerant which passes through it.

The evaporator 108 of the air conditioning circuit 104 is arranged such that it is in heat exchange contact with the cooling circuit 106 and refrigerant circulating through the air conditioning circuit 104. The cooling circuit 106 is in heat exchange contact with the vehicle cab 102. The cooling circuit 106 comprises a first conduit portion 133 which extends from the evaporator 108 to the cab 102 and a second conduit portion 135 which extends from the cab 102 back to the evaporator 108. A first pump 128a, which is operable to pump coolant in the first conduit portion from the evaporator through the cab 102, is provided between the cab 102 and the evaporator 108. The second conduit portion 135 comprises a first control valve 130b located between the cab and the evaporator 108. The first control valve 130b is operable to control flow between the cab 102 and the evaporator 108. A second pump 128b is provided between the first control valve 130b and the evaporator 108. The second pump 128b is operable to pump the coolant through the cooling circuit 106 towards the evaporator 108. A second control valve 130a is located between the second pump 128b and the evaporator 108. The second control valve 130a controls the flow between the second pump 128b and the evaporator 108.

A first device fluid line 140 fluidly connects the first conduit portion 133 to the thermal energy storage device 10. The first device fluid line 140 extends from a portion of the first conduit portion 133 located between the evaporator 108 and the first pump 128a to the device 10. A second device fluid line 141 fluidly connects the device 10 to the second conduit portion 135. The second device fluid line 141 extends from the device 10 to a portion of the second conduit portion 135 located between the second pump 128b and the first control valve 130b.

A controller 132 is in communication with the control valves 130a, 130b and the pumps 128a, 128b, and a temperature sensor 134 located in the cab 102.

### Industrial Applicability

In use, while the internal combustion engine is on, the refrigerant is circulated through the air conditioning circuit 104, and the evaporator 108 provides a cooling effect to the coolant in the cooling circuit 106. In accordance with the standard operation of a standard vapour-compression circuit, firstly refrigerant passes through the compressor 114 at a low temperature and pressure in a gaseous state via second fluid line 111. The compressor 114 acts to increase the pressure of the refrigerant. The refrigerant then enters the condenser 110. While the refrigerant is in the condenser 110, the refrigerant rejects heat. The refrigerant is then circulated through the expansion valve 112. At this point, the refrigerant is allowed to expand, meaning the refrigerant decreases in pressure and drops in temperature. The refrigerant then enters the evaporator 108 at a lower temperature than the coolant in the cooling circuit 106, which is in heat exchange contact with the evaporator, meaning the refrigerant can draw heat from the coolant in the cooling circuit 106 and lower the temperature of the coolant in the cooling circuit.

While the internal combustion engine of the vehicle is on, the controller 132 controls valves 130a, 130b and pumps 128a, 128b such that coolant is directed from the evaporator 108 through the first conduit portion 133, through the cab 102, through the second conduit portion 135 and back to the evaporator 108. While the engine is on, the controller 132 also controls the valves 130a, 130b and pumps 128a, 128b such that coolant from the cooling circuit 106 passes through the device 10. The energy storage medium inside the containers therefore reduces in temperature. While the engine is on, the coolant passes through the device 10 in the direction indicated by the arrows (.i.e. from the first conduit portion 133 to the second conduit portion 135).

When the air conditioning circuit 104 is not in operation, for example, when the vehicle engine is off, the controller 132 controls the valves 130a, 130b and pumps 128a, 128b such that coolant from the cooling circuit 106 is passed through the thermal energy storage device 10. This means that the containers in the device 10 act as a heat sink for the coolant in the cooling circuit 106, thereby allowing the coolant in the cooling circuit 106 to be cooled and for the cooling circuit to provide a cooling effect to the vehicle cab while the air conditioning circuit 104 is not in operation. While the air conditioning circuit 104 is off, the coolant is directed through the device 10 in a direction opposite to that indicated by the arrows (i.e. from the second conduit portion 135 to the first conduit portion 133). Preferably, coolant is passed through the thermal energy storage device 10 at the rate of 13 litres per minute. The controller 132 may control the pumps 128a, 128b to increase the flowrate of coolant through the circuit 104, if the temperature sensor 134 indicates that the temperature of the cab 102 needs to be reduced.

The arrangement of the outlet axes of the apertures in the at least one fluid distribution plate results in a flow path of coolant through the tank which more effectively transfers energy between the coolant and the energy storage medium stored in the containers. This means the thermal storage device has an improved heat transfer coefficient with respect to prior devices. This reduces energy waste in a cooling system incorporating the thermal energy storage device of the invention.

The flow path of the coolant through the tank is further optimised for the purpose of energy transfer between the coolant and the energy storage medium stored in the containers by the fact the device may comprise first and second fluid distribution plates, and first and second fixed arrays of containers.

The flow path of the coolant through the tank for the purpose of energy transfer between the coolant and the energy storage medium stored in the containers is further optimised by the relative grouping, positioning and sizing of the apertures in the first and second plates disclosed herein.

Advantageously, the netting allows the containers to be fixed in position within the tank, whilst allowing uniform expansion/contraction of each container to occur.

The apertures may not be circular as depicted in the figures of this specification. For example, the apertures may be square-shaped or triangle-shaped.

The containers may be spheres which may each have a diameter of 2 or 4 inches. 80% of the container internal volume may be filled with a storage medium such as water.

An orifice tube may be employed in the air conditioning circuit, rather than the expansion valve.

Modifications and improvements may be incorporated without departing from the scope of the invention, which is defined by the appended claim

## Claims

1. A thermal energy storage device (TES) comprising:
a tank having an inlet and an outlet;
at least one fluid distribution plate which divides the tank into at least first and second chambers, the at least one fluid distribution plate having a plurality of groups of apertures allowing fluid communication between the first and second chambers, wherein each aperture has an aperture outlet axis; and
a first fixed array of containers located within the second chamber, each container filled with an energy storage medium;
wherein each group of apertures is arranged in the at least one plate such that the aperture outlet axis of each aperture of a group projects through at least one container.

2. The device of claim 1, wherein the aperture outlet axes of each group of apertures project through the same container.

3. The device of claim 1 or 2, wherein the device further comprises at least one net located inside and fixed to the tank, wherein the first fixed array of containers is held inside the at least one net.

4. The device of any of claims 1 to 3, wherein the at least one plate comprises at least first and second fluid distribution plates which divide the tank into at least the first chamber, the second chamber and a third chamber, the first plate allowing fluid communication between the first and second chambers, and the second plate allowing fluid communication between the second and third chambers, wherein the first plate is proximate the inlet and, wherein the device further comprises a second fixed array of containers located within the third chamber, wherein each container of the second fixed array of containers is filled with an energy storage medium.

5. The device of claim 4, wherein the second plate has the same number of groups of apertures as the first plate.

6. The device of claim 4 or 5, wherein the apertures in the first and second plate have an aperture outlet diameter, wherein the aperture outlet diameter of each of the apertures of each group of the first plate is greater than the aperture outlet diameter of each of the apertures of each group of the second plate.

7. The device of claim 6, wherein the groups of apertures in each plate are evenly distributed in each plate such that they are arranged in rows and columns, each row comprising at least four groups of apertures and each column comprising at least four groups of apertures, wherein the apertures of the groups located closest to the centre of the first plate have a greater aperture outlet diameter than the apertures of the other groups in the first plate.

8. The device of claim 7, wherein the aperture outlet diameter of the apertures of the groups closest to the centre of the first plate is 10% to 300% larger than the aperture outlet diameter of the apertures of the other groups in the first plate.

9. The device of any of claims 4 to 8, wherein the at least one plate further comprises a third fluid distribution plate located between the second plate and the outlet such that the first, second and third plates divide the tank into the first chamber, the second chamber, the third chamber and a fourth chamber, wherein the third plate allows fluid communication between the third and fourth chambers.

10. The device of claim 9, wherein the arrangement of apertures in each of the second and third plates is the same.

11. The device of any preceding claim, wherein each group comprises at least four apertures.

12. The device of any preceding claim, wherein the containers are spherical.

13. The device of claim 13, wherein each container has a diameter D, wherein the distance between each aperture outlet in each group of apertures is less than D.

14. The device of any preceding claim, wherein the apertures of each group are arranged in the plate such that their locations correspond to corner points of a two dimensional shape having sides of equal length.

15. The device of claim 14 when dependent on claim 4, wherein the apertures of each group in the first and second plates are arranged in each plate such that their locations correspond to corner points of the same two dimensional shape having sides of equal length, wherein the apertures of each group in the second plate are arranged in the second plate such that they are spaced apart from each other to a greater degree than in the first plate.

16. A cooling system for a vehicle cab, comprising:
an air conditioning circuit comprising an evaporator;
a cooling circuit containing a coolant and comprising a thermal energy storage device according to any preceding claim, the device being fluidly connectable to the cooling circuit,
wherein the air conditioning and cooling circuits are in heat exchange contact with the evaporator.

17. A vehicle comprising: a vehicle cab and the cooling system of claim 16.
